# EUROPÄISCHE PATENTSCHRIFT

(11) **EP 2 149 322 B1**
(45) Veröffentlichungstag und Bekanntmachung des Hinweises auf die Patenterteilung: **12.09.2012**
(21) Anmeldenummer: 09009229.7
(22) Anmeldetag: 15.07.2009
(51) Int. Cl.: A47J 36/04

(54) **Einwegbräter**
Single-use roasting vessel
Récipient à rôti à usage unique

(30) Priorität: 31.07.2008 DE 202008010268 U
(43) Veröffentlichungstag der Anmeldung: 03.02.2010
(73) Patentinhaber: Hörmann, Jan, 33803 Steinhagen (DE)
(72) Erfinder: Hörmann, Jan, 33803 Steinhagen (DE)
(74) Vertreter: Laufhütte, Dieter

(56) Entgegenhaltungen:
- EP-A- 0 608 031
- DE-U1- 9 209 045
- DE-U1- 20 009 701
- JP-A- 10 201 629
- US-A1- 2006 144 251

## Beschreibung

Die Erfindung betrifft einen Einwegbräter bestehend aus einer Unterschale und aus einer Oberschale.

Kochtöpfe und Bräter sind in den unterschiedlichsten Ausführungsvarianten bekannten. Sie bestehen aus den unterschiedlichsten Materialien und sind üblicherweise für den Mehrfachgebrauch konzipiert.

In derartigen Kochtöpfen und Brätern können beispielsweise Speisen in Salzhülle gegart werden. Bei einer derartigen Speisezubereitung in Salzhülle, beispielsweise Fleisch oder Fisch, handelt es sich um ein besonders schonendes Garverfahren, in dem sichergestellt ist, dass das Gargut im eigenen Saft gegart wird. Hierzu wird das Gargut mit einer Salzschicht ausgekleidet in einen entsprechend großen Topf gesetzt und mit dem Salzteig, der beispielsweise aus einer mit Eiweiß gebundenen Salzhülle besteht, ummantelt. Das Gargut wird von dem Salzteig derartig ummantelt, dass das Gargut völlig dicht umschlossen ist. In einem entsprechend auf ca. 200°C aufgeheizten Ofen wird das Gargut dann über mehrere Stunden gegart. Hinterher ist die Salzschicht fest geworden und muss mit einem Hammer oder einem Fleischklopfer aufgebrochen werden, um das Gargut entnehmen zu können. Vorteil bei dem Garen im Salzmantel ist es, dass das Gargut im Ganzen zubereitet wird und während des Garens hermetisch abgeschlossen ist, so dass das Fett während des Garvorgangs nicht ablaufen kann. Darüber hinaus ist ein zusätzliches Salzen nicht notwendig. Das Gargut kann auch auf einem Backblech ohne Topf mit Salz ummantelt werden.

Nachteilig insbesondere bei dem Garen in einem Topf mit Salzkruste ist es aber, dass der Topf mit einer mehr Zentimeter dicken Salzschicht ausgekleidet werden muß und dass das dann darauf gegebene Gargut ebenfalls mit dem Salz umkleidet werden muss. Auch das Aufschlagen des Salzes nach dem Garen und das Entfernen des Salzes aus dem Topf nach Entnahme des Gargutes ist sehr aufwendig.

Aus der US-A-2006/144251 ist bereits ein Salzbräter bekannt, der in der Innenseite der Unterschale Rinnen zum Abfluß von aus dem Gargut austretenden Garsäften hat.

Aufgabe der Erfindung ist es, einen Einwegbräter zu schaffen, mit dem im Salzmantel gegartes Gut in einfacherer Art und Weise bereitbar ist.

Erfindungsgemäß wird diese Aufgabe durch die Lehre des Anspruchs 1 gelöst. Demnach ist ein Einwegbräter bestehend aus einer Unterschale und aus einer Oberschale vorgesehen der im wesentlichen aus Salz besteht. Im Oberteil des Einwegbräters sind in der Anssenseite in längs-und/oder Querrichtung Sollbruchlinein vorgesehen. Grundsätzlich können diese natürlich auch im Unterteil vorgesehen sein. Hierdurch läßt sich der Einwegbräter nach entsprechendem Garen des Gargutes einfacher öffnen.

Dadurch dass der Bräter insgesamt aus Salz besteht, ist das aufwendige Ummanteln des Gargutes mit der Salzmasse in einem herkömmlichen Topf nicht mehr notwendig. Das Gargut, beispielsweise Fleisch, Fisch, Gemüse oder beispielsweise auch Süßspeisen wie Dampfnudeln, können in den Einwegbräter eingelegt werden und nach Verschließen des Einwegbräters entsprechend im Ofen bei einer dem Gargut entsprechenden Temperatur gegart werden.

Besonders vorteilhafte Ausgestaltungen der Erfindung ergeben sich aus den sich an den Hauptanspruch anschließenden Unteransprüchen.

Demnach ist das Salz des Einwegbräters vorzugsweise über einen biologischen Kleber miteinander verbunden. Hierdurch läßt sich das Salz in einem Teig gut verformen. Die Teile des Einwegbräters können in einer entsprechenden Formpresse einfach hergestellt werden. Dabei können beliebige Größe und Formen des Einwegbräters verwirklicht werden. Er kann beispielsweise eine gefällige Fischform aufweisen oder aber entsprechend flach ausgeführt sein, so dass er zur Garung auf einem Grill verwendet werden kann (z. B. die Tellerform für eine Pizza).

Der biologische Kleber besteht vorteilhafterweise im wesentlichen aus Stärke, vorzugsweise Kartoffelstärke. Jeder andere biologische Kleber, wie beispielsweise Eiweiß, ist aber in ähnlicher Weise geeignet.

Besonders vorteilhaft weist der Einwegbräter die Form eines Römertopfes auf. Aber jede andere zweckmäßige Form ist möglich im Rahmen der Erfindung.

Der Boden des Einwegbräters ist gemäß einer anderen vorteilhaften Ausgestaltung der Erfindung in seiner Unterschale dicker ausgeführt als die übrigen Wandstärken. Hierdurch kann mehr Flüssigkeit aufgenommen werden.

Vorteilhaft können an der Seite der Ober- und/oder Unterschalen Griffe angeformt sein. Zusätzlich oder alternativ kann an der Oberseite der Oberschale noch ein Haltegriff angeformt sein.

Gemäß einer weiteren bevorzugten Ausgestaltung der Erfindung ist der Rand der Ober- und/oder Unterschale flanschartig ausgebildet, wobei er wahlweise eine oder mehrere Griffmulden aufweist. Die Unterschale des Einwegbräters weist schräg nach oben verlaufende Seitenwandungen auf, so dass die Unterschalen ineinander stapelbar sind.

Vorteilhaft kann im Boden der Unterschale eine Mulde für das Kochgut ausgenommen sein.

Weitere Merkmale, Einzelheiten und Vorteile der Erfindung werden anhand eines in der Zeichnung dargestellten Ausführungsbeispiels erläutert. Es zeigen:
- Figur 1:: eine Draufsicht auf einen Einwegbräter gemäß einer Ausführungsform der Erfindung,
- Figur 2:: einen Schnitt entlang der Schnittlinie B-B durch Figur 1,
- Figur 3:: einen Schnitt entlang der Schnittlinie A-A gemäß Figur 1,
- Figur 4:: eine Darstellung von mehreren Unterschalen und Oberschalen eines Einwegbräters in gestapelter Form und
- Figuren 5 - 8:: Seitenansichten bzw. Draufsichten des Ober- bzw. Unterteils der hier beschriebenen Ausführungsvariante des erfindungsgemäßen Einwegbräters.

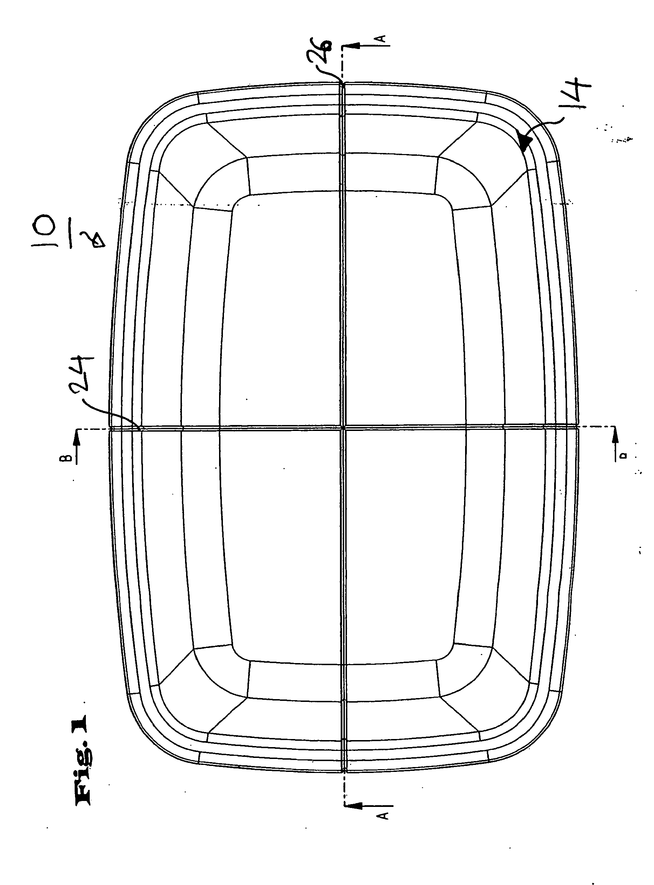

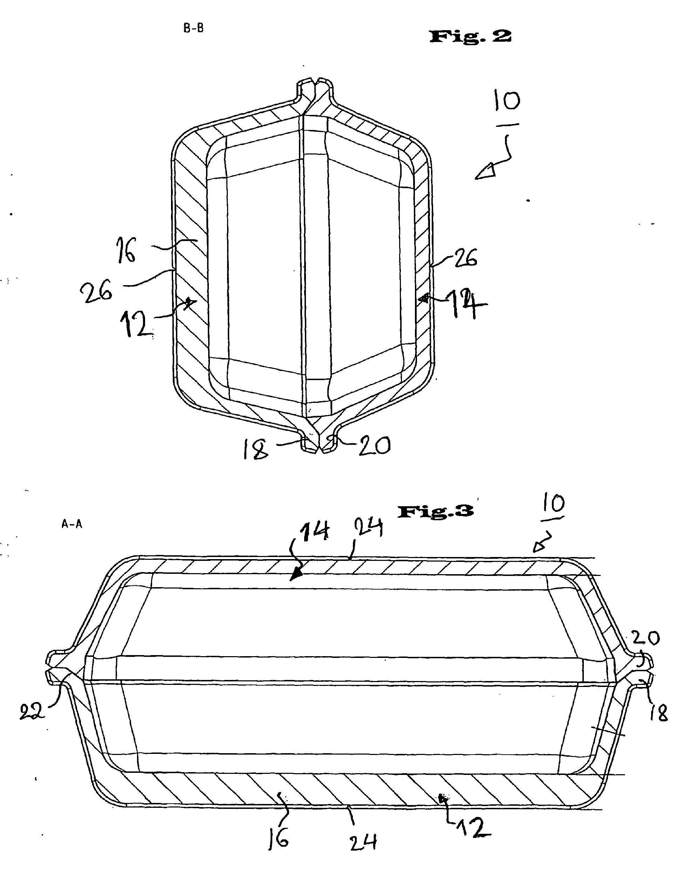

In den Figuren 1 bis 3 ist in Draufsicht und in jeweiligem Längs- bzw. Querschnitt ein Einwegbräter 10 gemäß einem bevorzugten Ausführungsbeispiel der vorliegenden Erfindung gezeigt. Wie insbesondere aus den Schnittdarstellungen in den Figuren 2 und 3 dargestellt, besteht der Einwegbräter aus einer Unterschale 12 und einer Oberschale 14, die jeweils im wesentlichen aus Salz bestehen. Die Form des Einwegbräters 10 entspricht derjenigen eines Römertopfes. Hierbei sind die Unterschale und Oberschale ähnlich hoch ausgestaltet. Im hier dargestellten Ausführungsbeispiel ist der Boden 16 der Unterschale 12 stärker ausgeführt als die Dicke der jeweiligen Wandungen. Sowohl die Unterschale 12 wie auch die Oberschale 14 weisen jeweils flanschartige Ränder 18 bzw. 20 an ihrem äußeren Rand auf. Im Bereich der Flansche 18 und 20 sind Oberschale und Unterschale wie in den Figuren 2 und 3 dargestellt über schräg verlaufende Kantenbereiche 22 formschlüssig ineinander eingepaßt, so dass die Oberschale 14 auf die Unterschale 12 passend aufgesetzt werden kann.

Die flanschartige Ausgestaltung der Unterschale 12 und der Oberschale 14 ermöglicht ein seitliches Greifen des Einwegbräters.

Da der Einwegbräter aufgrund des biologischen Klebers, vorzugsweise mit Kartoffelstärke gebundenes Salz, recht feste Seitenwände bildet, sind zur leichteren Entnahme des Gargutes und der damit verbundenen einfachen Zerstörung des Einwegbräters 10 Sollbruchlinien 24 und 26 vorgesehen. Diese verlaufen quer und längs entlang der Oberschale 14 bzw. der Unterschale 12.

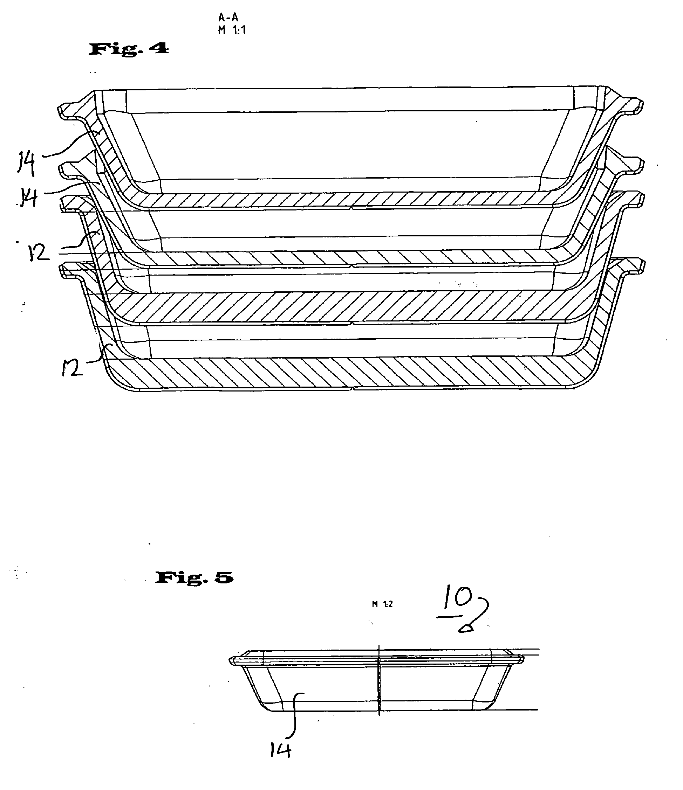

In der Figur 4 sind jeweils zwei Unterschalen 12 und zwei Oberschalen 14 übereinander gestapelt. Diese Staplung ist dadurch möglich, dass die Seitenwandungen der Unterschalen 12 und Oberschalen 14 jeweils schräg nach außen verlaufen.

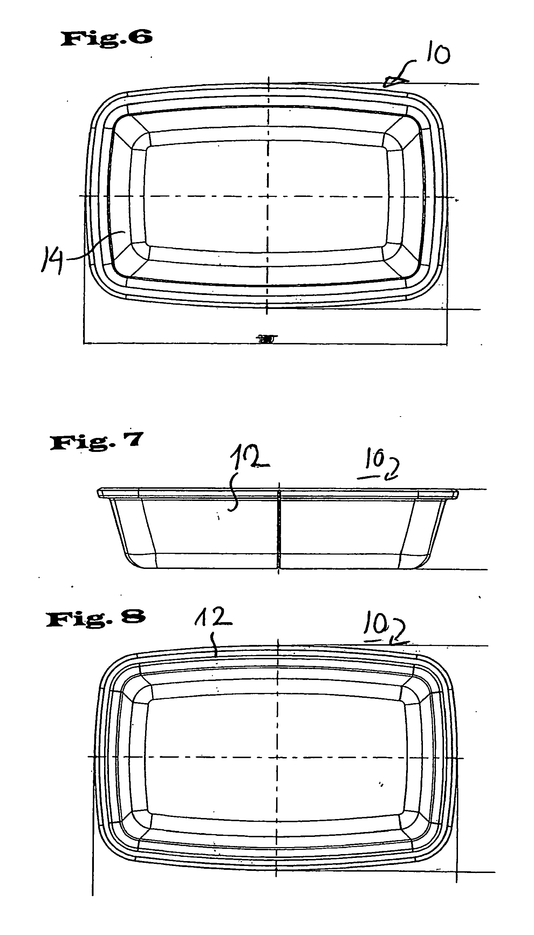

In den Figuren 5 bis 8 sind jeweils Draufsichten und Unteransichten sowie Seitenansichten des Einwegbräters 10 gezeigt, wobei die Figuren 5 und 6 Darstellungen der Oberschale 14 und die Figuren 7 und 8 Darstellungen der Unterschale 12 zeigen.

## Patentansprüche

1. Einwegbräter (10) bestehend aus einer Unterschale (12) und aus einer Oberschale (14), welcher im Wesentlichen aus Salz besteht, wobei in der Außenseite der Oberschale und/oder in der Außenseite der Unterschale Sollbruchlinien (24, 26) in Längs- und /oder Querrichtung vorgesehen sind.

2. Einwegbräter (10) nach Anspruch 1, **dadurch gekennzeichnet, dass** das Salz über einen biologischen Kleber miteinander verbunden ist.

3. Einwegbräter (10) nach Anspruch 2, **dadurch gekennzeichnet, dass** der biologische Kleber im wesentlichen aus Stärke, vorzugsweise Kartoffelstärke, besteht.

4. Einwegbräter (10) nach einem der vorangehenden Ansprüche, **dadurch gekennzeichnet, dass** er die Form eines Römertopfes aufweist.

5. Einwegbräter (10) nach einem der Ansprüche 1 bis 4, **dadurch gekennzeichnet, dass** der Boden (16) der Unterschale (12) dicker ausgeführt ist als die übrigen Wandstärken.

6. Einwegbräter (10) nach einem der vorangehenden Ansprüche, **dadurch gekennzeichnet, dass** an der Seite der Ober (14)- und/oder Unterschalen (12) Griffe angeformt sind.

7. Einwegbräter (10) nach einem der vorangehenden Ansprüche, **dadurch gekennzeichnet, dass** an der Oberseite der Oberschale (14) ein Griff angeformt ist.

8. Einwegbräter (10) nach einem der vorangehenden Ansprüche, **dadurch gekennzeichnet, dass** der Rand (18, 20) der Ober (14)- und/oder Unterschale (12) flanschartig ausgebildet ist und wahlweise eine oder mehrere Griffmulden aufweist.

9. Einwegbräter (10) nach einem der vorangehenden Ansprüche, **dadurch gekennzeichnet, dass** die Unterschale (12) schräg nach oben verlaufende Seitenwandungen aufweist, so dass sie ineinander stapelbar sind.

10. Einwegbräter (10) nach einem der vorangehenden Ansprüche, **dadurch gekennzeichnet, dass** im Boden (16) der Unterschale (12) eine Mulde für das Kochgut ausgenommen ist.

## Claims

1. A disposable roasting dish (10) comprising a lower shell (12) and an upper shell (14), which is essentially made of salt, with breaking lines (24, 26) being provided in the outside of the upper shell and/or in the outside of the lower shell in the longitudinal and/or transverse direction(s).

2. A disposable roasting dish (10) in accordance with claim 1, **characterized in that** the salt is bound together via an organic adhesive.

3. A disposable roasting dish (10) in accordance with claim 2, **characterized in that** the organic adhesive is substantially made of starch, preferably potato starch.

4. A disposable roasting dish (10) in accordance with any one of the preceding claims, **characterized in that** it has the shape of a clay pot roaster.

5. A disposable roasting dish (10) in accordance with one of the claims 1 to 4, **characterized in that** the base (16) of the lower shell (12) is made thicker than the other wall thicknesses.

6. A disposable roasting dish (10) in accordance with any one of the preceding claims, **characterized in that** handles are shaped at the side of the upper shell (14) and/or lower shell (12).

7. A disposable roasting dish (10) in accordance with any one of the preceding claims, **characterized in that** a handle is shaped at the upper side of the upper shell (14).

8. A disposable roasting dish (10) in accordance with any one of the preceding claims, **characterized in that** the rim (18, 20) of the upper shell (14) and/or lower shell (12) is made in the manner of a flange and selectively has one or more gripping recesses.

9. A disposable roasting dish (10) in accordance with any one of the preceding claims, **characterized in that** the lower shell (12) has obliquely upwardly extending side walls so that they can be stacked into one another.

10. A disposable roasting dish (10) in accordance with any one of the preceding claims, **characterized in that** a depression for the food to be cooked is recessed in the base (16) of the lower shell (12).

## Revendications

1. Sauteuse à usage unique (10) se composant d'une cuvette inférieure (12) et d'une cuvette supérieure (14), qui se compose principalement de sel, des lignes de rupture (24, 26) étant prévues dans le flanc extérieur de la cuvette supérieure et/ou dans le flanc extérieur de la cuvette inférieure dans la direction longitudinale et/ou transversale.

2. Sauteuse à usage unique (10) selon la revendication 1, **caractérisée en ce que** le sel est relié entre lui par l'intermédiaire d'une colle biologique.

3. Sauteuse à usage unique (10) selon la revendication 2, **caractérisée en ce que** la colle biologique se compose principalement d'amidon, de préférence de l'amidon de pomme de terre.

4. Sauteuse à usage unique (10) selon une quelconque des revendications précédentes, **caractérisée en ce qu'**elle présente la forme d'un diable de cuisine.

5. Sauteuse à usage unique (10) selon une quelconque des revendications 1 à 4, **caractérisée en ce que** le fond (16) de la cuvette inférieure (12) est d'épaisseur plus forte que les autres épaisseurs de parois.

6. Sauteuse à usage unique (10) selon une quelconque des revendications précédentes, **caractérisée en ce que** sur le côté des cuvettes supérieure (14) et/ou inférieure (12), des poignées sont formées.

7. Sauteuse à usage unique (10) selon une quelconque des revendications précédentes, **caractérisée en ce que** sur le flanc supérieur de la cuvette supérieure (14) une poignée est formée.

8. Sauteuse à usage unique (10) selon une quelconque des revendications précédentes, **caractérisée en ce que** le rebord (18, 20) de la cuvette supérieure (14) et/ou inférieure (12) est constitué en forme de bride et présente au choix une ou plusieurs auges de poignées.

9. Sauteuse à usage unique (10) selon une quelconque des revendications précédentes, **caractérisée en ce que** la cuvette inférieure (12) présente des parois latérales s'étirant en biais vers le haut de sorte qu'elles soient empilables l'une dans l'autre.

10. Sauteuse à usage unique (10) selon une quelconque des revendications précédentes, **caractérisée en ce que** dans le fond (16) de la cuvette inférieure (12), une auge est façonnée pour les aliments à cuisiner.
